# EUROPÄISCHE PATENTSCHRIFT

(11) **EP 0 560 783 B1**
(45) Veröffentlichungstag und Bekanntmachung des Hinweises auf die Patenterteilung: **22.01.1997**
(21) Anmeldenummer: 91918229.5
(22) Anmeldetag: 24.10.1991
(51) Int. Cl.: C09D 167/00, C09D 175/06

(54) **BESCHICHTUNGSMITTEL MIT HOHEM FESTSTOFFGEHALT, VERFAHREN ZUR HERSTELLUNG DAVON UND VERWENDUNG DER BESCHICHTUNGSMITTEL ZUR DECKLACKIERUNG UND ALS GRUNDIERUNG IM INDUSTRIEBEREICH**
COATING WITH HIGH SOLID MATTER CONTENT, PROCESS FOR PRODUCING THE SAME AND ITS USE AS COVERING LACQUER OR AS PRIMER IN INDUSTRIAL APPLICATIONS
ENDUIT A TENEUR ELEVEE EN MATIERES SOLIDES, SON PROCEDE DE PRODUCTION ET SON UTILISATION COMME EMAIL ET COMME COUCHE DE FOND DANS DES APPLICATIONS INDUSTRIELLES

(30) Priorität: 08.12.1990 DE 4039220
(43) Veröffentlichungstag der Anmeldung: 22.09.1993
(73) Patentinhaber: BASF Lacke + Farben AG, 48165 Münster-Hiltrup (DE)
(72) Erfinder: BODENMÜLLER, Oswald, D-5000 Köln 71 (DE); KRAMM, Ulrich, D-5010 Bergheim (DE); SINGE, Thomas, D-5357 Swisttal-Odendorf (DE); WEBER, Dieter, D-5065 Overath (DE)
(74) Vertreter: Münch, Volker, Dr.
(86) Internationale Anmeldenummer: EP9102016
(87) Internationale Veröffentlichungsnummer: WO9210550

(56) Entgegenhaltungen:
- EP-A- 0 145 006
- EP-A- 0 257 144
- DE-A- 2 428 408
- DE-A- 2 731 488
- Derwent's abstract, Nr. 88-171 875/25, JP 63 110 262, publ. Woche 8825

## Beschreibung

Die vorliegende Erfindung betrifft ein Beschichtungsmittel mit hohem Feststoffgehalt, das eine Bindemittelkomponente auf Polyesterbasis und eine Härterkomponente auf Isocyanatbasis enthält.

Gegenstand der vorliegenden Erfindung sind auch Verfahren zur Herstellung der Beschichtungsmittel und zum Beschichten von Substraten, bei denen diese Beschichtungsmittel eingesetzt werden sowie die Verwendung der Beschichtungsmittel.

Beschichtungsmittel mit hohem Feststoffgehalt auf Polyesterbasis sind bekannt. Sie enthalten häufig eine oder mehrere hydroxifunktionelle Komponenten, die mit einem geeigneten Härtungsmittel reagieren.
Beispielsweise sind aus der DE-OS 31 02 969 Beschichtungsmittel auf Polyesterbasis mit hohem Feststoffgehalt bekannt, die zu flexiblen und gleichzeitig harten, wetterbeständigen Deck- bzw. Finish-Schichten gehärtet werden können. Diese Beschichtungsmittel enthalten neben einem Härtungsmittel und ggf. einem Epichlorhydrin-Bisphenol-A-Epoxiharz ein Polyesterpolyol. Das Polyesterpolyol ist dabei das Reaktionsprodukt aus einem Gemisch aus einer aromatischen und einer aliphatischen Dicarbonsäure und einem Gemisch aus Neopentylglykol und mindestens einem anderen gehinderten Diol mit zwei Methylolgruppen, die direkt an eine cycloaliphatische oder aromatische Struktur oder an ein tertiäres Kohlenstoffatom gebunden sind. Nachteilig bei diesen Beschichtungsmitteln ist, daß insbesondere bei Applikation mittels Luftzerstäubung bzw. mittels des Airless-Spritzverfahrens keine universelle Einsetzbarkeit über einen weiten Bereich von Verarbeitungsparametern gegeben ist.

Weitere feststoffreiche Beschichtungsmittel auf der Basis von Polyester- und Alkydharzen sind beispielsweise auch in der EP-B-18051, EP-B-18052 und der US-PS 4,419,407 beschrieben.
Außerdem sind auch einige Alkydharzlösungen mit einem hohen Festkörpergehalt bei gleichzeitig möglichst niedriger Viskosität im Handel erhältlich, die zum Einsatz in festkörperreichen 2-Komponentenlacken empfohlen werden. Als Beispiele sind folgende Produkte zu nennen: Alkydal LS 2843 der Firma Bayer AG, Synthalat DRS 89-417 der Synthopol Chemie Dr. Rer. Pol. Koch GmbH & Co. KG sowie HALWEFTAL TN 2565 der Hüttenes-Albertus Chemische Werke GmbH.

Weiterhin sind aus der DE-PS 32 01 749 hitzehärtbare, festkörperreiche Überzugsmassen bekannt, die als Bindemittel eine Mischung aus 15 bis 60 Gew.-% eines ölfreien, alicyclische Carbonsäuren als Säurekomponente enthaltenden Polyesters, 5 bis 40 Gew.-% eines Alkydharzes mit einem Ölgehalt von 15 bis 50 % und einer OH-Zahl von 40 bis 200, 5 bis 40 Gew.-% eines Acrylharzes mit einer OH-Zahl von 20 bis 200 und einem zahlenmittleren Molekulargewicht von 1000 bis 30000 und 10 bis 40 Gew.-% eines Vernetzungsmittels enthalten. Diese Überzugsmassen weisen jedoch den Nachteil auf, daß keine ausreichende Trocknung der Beschichtungsmittel sowohl bei Raumtemperatur als auch bei den üblichen Bedingungen einer forcierten Trocknung möglich ist.

Auch aus der DE-OS 22 31 474 sind hitzehärtbare Überzugsmittel auf der Basis mindestens eines Alkydharzes, das 30 bis 70 Gew.-% eines trocknenden Öles enthält und eines Polyisocyanat-Härters bekannt. Diese Überzugsmittel können bis zu 10 Gew.-%, bezogen auf das Gewicht des Bindemittels, eines polymeren Weichmachers enthalten. Diese Überzugsmassen weisen aber den Nachteil eines zu niedrigen Festkörpergehaltes auf.

Weiterhin sind aus der EP-A-257 144 Beschichtungsmittel bekannt, die als Bindemittel eine Mischung aus einem ölfreien linearen und einem ölfreien verzweigten Polyester und als Vernetzer eine Isocyanatkomponente enthalten. Diese Beschichtungsmittel werden in dem sogenannten Coil Coating-Verfahren eingesetzt. Lacke mit hohem Festkörperanteil werden dort nicht beschrieben.

Ferner sind aus der EP-A-145 006 Beschichtungsmittel mit einem hohen Festkörperanteil bekannt, die als Bindemittel einen hydroxylgruppenhaltigen Polyester und als Vernetzer eine Isocyanatkomponente enthalten. Der als Bindemittel eingesetzte hydroxylgruppenhaltige Polyester enthält 10 bis 35 % cyclische Einheiten.

Die Untersuchung dieses und ähnlichen Standes der Technik würde zeigen, daß es auf dem Gebiet der Beschichtungsmittel auf Polyesterharzbasis häufig notwendig ist, eine günstige Eigenschaft zu opfern, um eine andere zu verbessern. Beispielsweise ist es oft schwierig, ein Beschichtungsmittel zur Verfügung zu stellen, das in hohen Feststoffgehalten applizierbar ist und zu Überzügen führt, die zäh und flexibel sind sowie eine gute Witterungs- und Chemikalienbeständigkeit aufweisen. Als problematisch erweist sich in der Praxis auch oft die Forderung, daß die Beschichtungsmittel universell pigmentierbar sein müssen und daß sie mittels unterschiedlichster Applikationsmethoden, wie z.B. nach dem Airless-Spritzverfahren, dem Air-Mix-Spritzverfahren, dem konventionellen Luftzerstäubungs-Spritzverfahren oder mit Hilfe von Rotationszerstäubern, aufbringbar sein müssen.

Der vorliegenden Erfindung liegt somit die Aufgabe zugrunde, Beschichtungsmittel zur Verfügung zu stellen, die mit relativ hohen Feststoffgehalten mit den verschiedensten Applikationsverfahren aufgebracht und bei gewerblich brauchbaren Temperaturen, bevorzugt bei Temperaturen zwischen Raumtemperatur und 140°C, schnell gehärtet werden können. Weiterhin sollten die Beschichtungsmittel universell pigmentierbar sein sowie zu Überzügen führen, die bei einer hohen Flexibilität gleichzeitig eine hohe Oberflächenhärte aufweisen und außerdem neben einem hohen Glanz eine gute Chemikalienbeständigkeit sowie ggf. - je nach Anwendungszweck - eine gute Wetterbeständigkeit zeigen.

Überraschenderweise wird diese Aufgabe durch ein Beschichtungsmittel gelöst, das eine Bindemittelkomponente auf Polyesterbasis und eine Härterkomponente auf Isocyanatbasis enthält, dadurch.gekennzeichnet, daß das Beschichtungsmittel als Bindemittel eine Mischung aus
a) 30 bis 94 Gew.-% mindestens eines hydroxylgruppenhaltigen Polyesterharzes mit einer OH-Zahl von 40 bis 140 mg KOH/g und einem Ölgehalt von 25 bis 57 %,
b) 3 bis 50 Gew.-% mindestens eines verzweigten hydroxylgruppenhaltigen Polyesters auf der Basis cycloaliphatischer und/oder aromatischer Di-und/oder Polycarbonsäuren mit einer OH-Zahl von 100 bis 200 mgKOH/g und einem Gehalt an tri- und/-oder höherfunktionellen Alkoholen und/oder Carbonsäuren von mindestens 15 Mol-%, bezogen auf den Gesamtgehalt an Alkoholen und Carbonsäuren, und
c) 3 bis 50 Gew.-% mindestens eines mit synthetischen Fettsäuren modifizierten Polyesters mit einer OH-Zahl von 80 bis 150 mgKOH/g und einem Gehalt an synthetischen Fettsäuren von 35 bis 50 Gew.-%, bezogen auf das Gewicht des modifizierten Polyesters, enthält, wobei die Summe der Gewichtsanteile der Komponenten a bis c jeweils 100 Gew.-% beträgt.

Die vorliegende Erfindung betrifft außerdem Verfahren zur Herstellung dieser Beschichtungsmittel, Verfahren zum Beschichten von Substraten, bei denen diese Beschichtungsmittel eingesetzt werden sowie die Verwendung der Beschichtungsmittel.

Es ist überraschend und war nicht vorhersehbar, daß die Beschichtungsmittel mit relativ hohen Feststoffgehalten von bevorzugt > 60 % mit den verschiedensten Applikationsmethoden aufgebracht werden können, wie z.B. nach dem Airless-Spritzverfahren, dem Air-Mix-Spritzverfahren, dem konventionellen Luftzerstäubungsspritzverfahren oder mittels Rotationszerstäubung. Insbesondere weisen die Beschichtungsmittel den Vorteil auf, universell pigmentierbar zu sein. Dies bedeutet, daß eine Vielzahl üblicher anorganischer und organischer Pigmente eingearbeitet werden kann, ohne daß Ausschwimmprobleme oder Pigmentbenetzungsstörungen auftreten. Vorteilhaft ist außerdem, daß die resultierenden Beschichtungen bei einer guten Oberflächenhärte gleichzeitig eine gute Flexibilität aufweisen sowie neben einem hohen Glanz auch eine gute Chemikalienbeständigkeit zeigen. Beim Einsatz aliphatischer Isocyanate als Härter zeichnen sich die Überzüge außerdem durch eine gute Witterungsbeständigkeit aus. Beim Einsatz aromatischer Isocyanate als Härter weisen die Beschichtungsmittel außerdem den Vorteil einer äußerst schnellen Trocknung auf.

Im folgenden werden nun zunächst die einzelnen Komponenten der erfindungsgemäßen Beschichtungsmittel näher erläutert.
Es ist erfindungswesentlich, daß die Beschichtungsmittel als Bindemittel eine Mischung aus
a) 30 bis 94 Gew.-%, bevorzugt 70 bis 90 Gew.-%, mindestens eines hydroxylgruppenhaltigen Polyesterharzes mit einer OH-Zahl von 40 bis 140 mgKOH/g, bevorzugt 50 bis 90 mgKOH/g und einem Ölgehalt von 25 bis 57 %, bevorzugt 40 bis 50 %,
b) 3 bis 50 Gew.-%, bevorzugt 5 bis 15 Gew.-%, mindestens eines verzweigten hydroxylgruppenhaltigen Polyesters auf der Basis cycloaliphatischer und/oder aromatischer Di- und/oder Polycarbonsäuren mit einer OH-Zahl von 100 bis 200 mgKOH/g, bevorzugt 115 bis 150 mgKOH/g, und mit einem Gehalt an tri- oder höherfunktionellen Alkoholen und/oder Carbonsäuren von mindestens 15 Mol-% und
c) 3 bis 50 Gew.-%, bevorzugt 5 bis 15 Gew.-%, mindestens eines mit synthetischen Fettsäuren modifizierten Polyesters mit einer OH-Zahl von 80 bis 150 mgKOH/g, bevorzugt 115 bis 130 mgKOH/g, und mit einem Gehalt an synthetischen Fettsäuren von 35 bis 50 Gew.-%, bezogen auf das Gewicht des modifizierten Polyesters,
enthalten, wobei die Summe der Gewichtsanteile der Komponenten a bis c jeweils 100 Gew.-% beträgt. Dabei sind sowohl die Gewichtsangaben als auch die Kennzahlen der Komponenten a bis c jeweils auf die 100%igen Bindemittel ohne Lösungsmittelanteil bezogen.

Die als Komponente a eingesetzten Polyesterharze werden nach den bekannten Methoden (vgl. z.B. EP-A-237 749) durch Umsetzung in der Schmelze oder in organischen Lösungsmitteln bei Temperaturen von im allgemeinen 200 bis 260°C hergestellt.

Die Öllänge der Polyesterharze liegt zwischen 25 bis 57 %, bevorzugt zwischen 40 und 50 %. Unter Öllänge wird dabei der Anteil an Fettsäuren in Gew.-%, bezogen auf das Gewicht des Polyesterharzes (Festharzanteil), verstanden. Die erfindungsgemäß eingesetzten Polyesterharze a haben im allgemeinen Säurezahlen < 50 mgKOH/g, bevorzugt < 10 mgKOH/g sowie Jodzahlen < 70 mgI₂/g, bevorzugt < 50 mgI₂. Das Hydroxyläquivalentgewicht der Polyesterharze liegt bevorzugt zwischen 425 und 1700, besonders bevorzugt zwischen 900 und 1000.

Die OH-Zahl der Polyesterharze liegt zwischen 40 und 140 mgKOH/g, bevorzugt zwischen 50 und 90 mgKOH/g. Bevorzugt werden Polyesterharzlösungen eingesetzt, die bei einem Feststoffgehalt von 60 % Viskositäten zwischen 25 und 60s nach DIN 53 211 bei 20 °C aufweisen. Diese Polyesterharze werden bevorzugt als Lösung mit einem Feststoffgehalt von > 70 %, besonders bevorzugt ≥ 80 %, eingesetzt.

Für die Herstellung der als Komponente a eingesetzten Polyesterharze können die üblicherweise für die Herstellung von Polyesterharzen eingesetzten Rohstoffe verwendet werden, wobei die Mengen der einzelnen Komponenten jeweils so zu wählen sind, daß die Polyesterharze die obengenannten Kennzahlen aufweisen.

Bevorzugte Polyesterharze werden unter Mitverwendung von aliphatischen und/oder cycloaliphatischen und/oder aromatischen, bevorzugt aromatischen, Dicarbonsäuren oder geeigneten Dicarbonsäurederivaten, ggf. in Kombination mit kleinen Mengen, bevorzugt ≤ 10 Mol-% (bezogen auf den Carbonsäureanteil), höherfunktionellen Carbonsäuren und ggf. in Kombination mit aromatischen Monocarbonsäuren erhalten.

Als Fettsäurekomponente zur Herstellung der Polyesterharze wird bevorzugt eine Mischung aus natürlichen Ölen bzw. Fettsäuren mit einem Anteil von 7 bis 25 Gew.-%, bevorzugt 7 bis 14 Gew.-%, mindestens einer gesättigten Fettsäure, 30 bis 35 Gew.-%, bevorzugt 30 bis 35 Gew.-%, mindestens einer Fettsäure mit 2 Doppelbindungen pro Molekül und 40 bis 57 Gew.-%, bevorzugt 51 bis 57 Gew.-%, mindestens einer Fettsäure mit 3 oder mehr Doppelbindungen pro Molekül sowie ggf, bis zu 3 Gew.-% weiterer langkettiger Fettsäuren eingesetzt. Sämtliche Gew.-%-Angaben sind dabei auf das Gewicht des Harzes bezogen.
Als Fettsäurekomponente werden bevorzugt Fettsäuren vom Sojaöl-Typ eingesetzt, es sind aber auch andere trocknende Öle, wie z.B. Tungöl, Tallöl, Leinsamenöl, dehydratisiertes Rhizinusöl, Chinaholzöl, Mischungen daraus u.ä. trocknende Öle geeignet. Die Fettsäuren können auch in Form ihrer Glyceride eingesetzt werden.

Beispiele für geeignete aromatische Di- und/oder Polycarbonsäuren, die zusammen mit den Fettsäuren zur Herstellung der Polyesterharze a eingesetzt werden können, sind Phthalsäure, Terephthalsäure, Isophthalsäure, Trimellithsäure, Pyromellithsäure, 2-Methyltrimellithsäure sowie Naphthalindi- und tricarbonsäuren u.ä.

Beispiele für geeignete aliphatische Di- und Polycarbonsäuren sind Bernsteinsäure, Glutarsäure, Adipinsäure, Pimelinsäure, Suberinsäure, Acelainsäure, Sebacinsäure, 2-Ethylhexansäure, Isononansäure u.ä. Es können auch ungesättigte Carbonsäuren, beispielsweise Maleinsäure, Fumarsäure, Itaconsäure, Citraconsäure u.ä. mitverwendet werden.
Beispiele für geeignete cycloaliphatische Di- und Polycarbonsäure sind Tetrahydrophthalsäure, Hexahydrophthalsäure, 1,4-Cyclohexandicarbonsäure, Methylcyclohexandicarbonsäure u.ä.

Beispiele für geeignete aromatische Monocarbonsäuren sind Benzoesäure, alkylsubstituierte Benzoesäuren, Naphthensäuren und deren Isomeren, Abietinsäure und deren Isomeren u.ä., wobei bevorzugt Benzoesäure eingesetzt wird.
Besonders bevorzugte Polyesterharze werden durch Verwendung von Phthalsäure oder Mischungen von Phthalsäure und Adipinsäure, ggf. zusammen mit aromatischen Monocarbonsäuren, und den obengenannten Fettsäuren erhalten.
Die genannten Carbonsäuren können für die Herstellung der Polyesterharze in Form der freien Säuren oder geeigneter veresterungsfähiger Derivate (z.B. Anhydride) oder geeigneter umesterungsfähiger Derivate (z.B. Methylester) eingesetzt werden.

Für den Aufbau der Polyesterharze können als Alkoholkomponente aliphatische und/oder aromatische und/oder cycloaliphatische geradkettige oder verzweigte Di- und/oder Polyole eingesetzt werden. Bevorzugt werden aliphatische Di- und/oder Polyole eingesetzt. Beispiele für geeignete aliphatische Di- und Polyole sind Glykole, wie z.B. Ethylenglykol, Propylenglykol, Neopentylglykol, 1,4-Butandiol, 1,6-Hexandiol, 2,2,4-Trimethyl-1,3-pentandiol, Diethylenglykol, Triethylenglykol sowie Triole und Polyole, wie z.B. Trimethylolethan, Trimethylolpropan, Glycerin, ethoxiliertes und propoxiliertes Glycerin, Pentaerythrit, Dipentaerythrit, Ditrimethylolpropan, Mannit, Sorbit u.ä. Bevorzugt werden Pentaerythrit und Trimethylolpropan eingesetzt.

Für den Einsatz in den erfindungsgemäßen Beschichtungsmitteln geeignet sind auch verschiedene handelsübliche, festkörperreiche und niedrigviskose Polyesterharzlösungen, die die obengenannten Kennzahlen aufweisen.

Als weitere Bindemittelkomponente b enthalten die erfindungsgemäßen Beschichtungsmittel mindestens einen verzweigten hydroxylgruppenhaltigen Polyester auf der Basis cycloaliphatischer und/oder aromatischer Di- und/oder Polycarbonsäuren. Diese als Komponente b eingesetzten verzweigten Polyester weisen OH-Zahlen von 100 bis 200 mgKOH/g, bevorzugt 115 bis 150 mgKOH/g, auf. Die Säurezahl dieser Polyester liegt im allgemeinen unter 30 mgKOH/g, bevorzugt unter 15 mgKOH/g. Die Jodzahl dieser Polyester beträgt üblicherweise weniger als 50 mgI₂/g, bevorzugt weniger als 10 mgI₂/g. Das Hydroxyläquivalentgewicht dieser Polyester liegt bevorzugt zwischen 340 und 600, besonders bevorzugt zwischen 380 und 475. Bevorzugt werden Polyesterharzlösungen eingesetzt, die bei einem Feststoffgehalt von 60 % eine Viskosität zwischen 2,5 und 4,0 dPas bei 23°C aufweisen. In den Beschichtungsmitteln wird dieser verzweigte hydroxylgruppenhaltige Polyester bevorzugt als Lösung mit einem Feststoffgehalt ≥ 70 % eingesetzt.

Die als Komponente b eingesetzten Polyester sind nach den üblichen Methoden herstellbar (vgl. z.B. Houben Weyl, Methoden der organischen Chemie, 4. Auflage, Band 14/2, Georg Thieme Verlag, Stuttgart 1961). Für die Herstellung dieser verzweigten hydroxylgruppenhaltigen Polyester geeignet sind cycloaliphatische und/oder aromatische Di- und/oder Polycarbonsäuren, bevorzugt cycloaliphatische Di- und/oder Polycarbonsäuren sowie aliphatische und/oder cycloaliphatische und/oder aromatische Di- und/oder Polyole, wobei bevorzugt aliphatische Di- und/oder Polyole als Alkoholkomponente eingesetzt werden. Die Aufbaukomponenten dieses Polyesters sind dabei so zu wählen, daß mindestens 15 Mol-%, bezogen auf die Gesamtmenge an eingesetzter Säurekomponente plus eingesetzter Alkoholkomponente, der Aufbaukomponenten tri- und/oder höherfunktionell sind, wobei es möglich ist, tri- und/oder höherfunktionelle Alkohole oder tri- und/oder höherfunktionelle Carbonsäuren oder Mischungen aus triund/oder höherfunktionellen Alkoholen und triund/oder höherfunktionellen Carbonsäuren einzusetzen. Beispiele für geeignete Aufbaukomponenten sind die bereits bei der Beschreibung der Polyesterharze a genannten cycloaliphatischen Carbonsäuren, aromatischen Carbonsäuren sowie aliphatischen Alkohole, so daß hier nur auf die Seiten 8 bis 10 der Beschreibung verwiesen wird.

Als Bindemittelkomponente c enthalten die erfindungsgemäßen Beschichtungsmittel mindestens einen mit synthetischen Fettsäuren modifizierten Polyester, der eine OH-Zahl von 80 bis 150 mgKOH/g, bevorzugt 115 bis 130 mgKOH/g und einen Gehalt an synthetischen Fettsäuren von 35 bis 50 Gew.-%, bezogen auf das Gewicht des modifizierten Polyesters, aufweist. Diese Polyester weisen üblicherweise Säurezahlen unter 50 mgKOH/g, bevorzugt unter 10 mgKOH/g und Jodzahlen unter 50 mgI₂/g, bevorzugt < 10 mgI₂/g, auf. Das Hydroxyläquivalentgewicht dieser Polyester liegt bevorzugt zwischen 360 und 710, besonders bevorzugt zwischen 430 und 490. Bevorzugt werden Polyesterharzlösungen eingesetzt, die bei einem Feststoffgehalt von 70 % eine Viskosität zwischen 5 und 7 dPas bei 23°C aufweisen. In den Beschichtungsmitteln wird dieser modifizierte hydroxylgruppenhaltige Polyester bevorzugt als Lösung mit einem Feststoffgehalt ≥ 70 % eingesetzt.
Die als Komponente c eingesetzten Polyester sind nach den üblichen Methoden herstellbar (vgl. z.B. Houben Weyl, Methoden der organischen Chemie, 4. Auflage, Band 14/2, Georg Thieme Verlag, Stuttgart 1961).

Zur Modifizierung dieses als Komponente c eingesetzten Polyesters werden bei der Herstellung 35 bis 50 Gew.-%, bezogen auf das Gewicht des modifizierten Polyesters (Festharz), synthetische Fettsäuren eingesetzt. Beispiele für geeignete Fettsäuren sind Isononansäure und 2-Ethylhexylsäure.

Zur Herstellung der als Komponente c eingesetzten Polyester können zusammen mit den synthetischen Fettsäuren noch weitere aliphatische und/oder cycloaliphatische und/oder aromatische Di- und/oder Polycarbonsäuren, ggf. zusammen mit geringen Mengen Monocarbonsäure, eingesetzt werden. Als Alkoholkomponente zur Herstellung dieser Polyester sind insbesondere aliphatische Di-, Tri- und Polyole geeignet.
Beispiele für geeignete Aufbaukomponenten sind die bereits bei der Beschreibung der Polyester a genannten Alkohole und Carbonsäuren, ausgenommen die dort aufgeführten Fettsäuren, so daß hier nur auf die Seiten 8 bis 10 der Beschreibung verwiesen wird.

Gegebenenfalls kann in den erfindungsgemäßen Beschichtungsmitteln zusammen mit den Polyesterkomponenten a bis c als weitere Bindemittelkomponente noch mindestens ein hydroxylgruppenhaltiges Acrylatcopolymerisat eingesetzt werden. Geeignete Acrylatcopolymerisate werden erhalten, indem ein Hydroxylgruppen enthaltendes Acrylmonomeres mit einem oder mehreren radikalisch-polymerisierbaren ungesättigten Monomeren in üblicher Weise copolymerisiert wird.

Beispiele für geeignete hydroxylgruppenhaltige Monomere sind C2- bis C8-Hydroxialkylester der Acryl- und Methacrylsäure, wie z.B. Hydroxiethylacrylat, Hydroxiethylmethacrylat, Hydroxipropylacrylat, Hydroxipropylmethacrylat usw. Diese hydroxylgruppenhaltigen Monomeren können entweder einzeln oder als Mischung von zwei oder mehreren verwendet werden.
Alle beliebigen Verbindungen mit einer radikalisch-polymerisierbaren ethylenisch ungesättigten Bindung können als Monomere, die mit dem hydroxylgruppenhaltigen Monomer copolymerisierbar sind, eingesetzt werden. Sie können breit aus solchen Verbindungen entsprechend den gewünschten Eigenschaften des Acrylatcopolymerisats ausgewählt werden. Typpische Beispiele für solche Monomere sind Alkylester der Acryl- und Methacrylsäure, vinylaromatische Verbindungen, α, β-ungesättigte Carbonsäuren, Glycidylgruppen enthaltende Vinylmonomere, Acryl- oder Methacrylsäureamide u.ä. Wegen weiterer Einzelheiten bezüglich geeigneter Monomere und Herstellbedingungen wird auf die DE-PS-32 01 749, Seiten 3 bis 5, verwiesen.

Die als weitere Bindemittelkomponente eingesetzten Acrylatcopolymerisate weisen üblicherweise OH-Zahlen von 20 bis 200 mgKOH/g auf und sind bevorzugt niedermolekular.

Für eine Härtung der erfindungsgemäßen Beschichtungsmittel über eine Reaktion der Hydroxylgruppen des Bindemittels enthalten die Beschichtungsmittel mindestens ein Di- und/oder Polyisocyanat.
Bei Verwendung von aliphatischen und/oder cycloaliphatischen Isocyanaten sind Überzüge mit hoher Witterungsbeständigkeit herstellbar. Die aliphatischen und/oder cycloaliphatischen Isocyanate werden dabei den Beschichtungsmitteln bevorzugt in einer solchen Menge zugesetzt, daß das Äquivalentverhältnis der OH-Gruppen des Bindemittels (Summe der OH-Gruppen der Komponenten a bis c sowie ggf. weiterer hydroxylgruppenhaltiger Komponenten) zu den NCO-Gruppen des Härters zwischen 1 : 1 und 1 : 1,1 liegt.

Bei Verwendung von aromatischen Isocyanaten werden Beschichtungsmittel mit einer beschleunigten Trocknung erhalten. Aufgrund der schlechteren Witterungsbeständigkeit werden diese Beschichtungsmittel hauptsächlich für die Herstellung von Überzügen für Innenanwendungen eingesetzt. Die aromatischen Isocyanate werden dabei den Beschichtungsmitteln bevorzugt in einer solchen Menge zugesetzt, daß das Äquivalentverhältnis der OH-Gruppen des Bindemittels (Summe der OH-Gruppen der Komponenten a bis c so wie ggf. weiterer hydroxylgruppenhaltiger Komponenten) zu den NCO-Gruppen des Härters zwischen 1 : 0,5 und 1 : 0,8 liegt.

Beispiele für geeignete aliphatische bzw. cycloaliphatische Di- und Polyisocyanate sind Hexamethylendiisocyanat, Decamethylendiisocyanat, Isophorondiisocyanat, Dicyclohexylmethan-4,4'-diisocyanat, Lysindiisocyanat sowie di- und trimerisierte Derivate dieser Isocyanate.

Beispiele für weitere geeignete aliphatische und cycloaliphatische Isocyanate sind auch die unter folgenden Namen im Handel erhältlichen Produkte:
Desmodur® N 75, Desmodur® 3200, Desmodur® N 3300, Desmodur® N 3390, Desmodur® Z 4370 und Desmodur® LS 2550 der Firma Bayer AG, Basonate® PLR 8638 der Firma BASF AG und Polyisocyanat IPDI T 1890 der Firma Hüls AG.

Beispiele für geeignete aromatische Di- und Polyisocyanate sind Diphenylmethan-4,4'-diisocyanat, Diphenylen-4,4'-diisocyanat, 2,4- und 2,6-Toluylendiisocyanat, m-Phenylendiisocyanat, p-Phenylendiisocyanat, 1,5-Naphthalindiisocyanat, 3,3'-Dimethyl-4,4'-biphenylendiisocyanat, 3,3'-Dimethoxi-4,4'-biphenylendiisocyanat, 3,3'-Diphenyl-4,4'-biphenylendiisocyanat, 4,4'-Biphenylendiisocyanat, 1,3,5-Benzol-Triisocyanat, para, para', para"'-Triphenylmethantriisocyanat und Xylylendiisocyanat.

Bevorzugt wird als Isocyanatkomponente ein aliphatisches oder cycloaliphatisches Isocyanat oder eine Mischung verschiedener aliphatischer und/oder cycloaliphatische Isocyanate eingesetzt, bei denen das Isocyanat oder im Fall von Mischungen die Mischung einen NCO-Gehalt von 10 bis 25 % aufweist, bezogen auf das Isocyanat ohne Lösungsmittelanteil. Bevorzugt weist das Isocyanat oder die Mischung verschiedener Isocyanate im Anwendungszustand, d.h. in der Form, in der die Isocyanatkomponente in den Beschichtungsmitteln eingesetzt wird, eine Viskosität von 100 bis 5000 mPas bei 20°C auf. Zur Einstellung dieser Viskosität können der Isocyanatkomponente ggf. Lösungsmittel zugesetzt werden.

Besonders bevorzugte Beschichtungsmittel werden durch Einsatz mindestens eines aliphatischen und/oder cycloaliphatischen Polyisocyanates mit einem NCO-Gehalt von 18 bis 25 % und einer Viskosität von 100 bis 200 mPas bei 20°C, jeweils bezogen auf das Isocyanat ohne Lösungsmittelanteil, erhalten. Gegebenenfalls können zusammen mit diesem aliphatischen, niedrigviskosen Polyisocyanat weitere Di- und/oder Polyisocyanate, bevorzugt aliphatische und/oder cycloaliphatische Isocyanate, eingesetzt werden.
Zur Erhöhung der Härtungsgeschwindigkeit der oxidativen Trocknung der erfindungsgemäßen Beschichtungsmittel werden außerdem vorzugsweise etwa 0,001 bis 3 Gew.-%, bezogen auf das Gewicht der Polyesterkomponente a (Festharzanteil), mindestens eines metallischen Trocknungsmittel zugesetzt. Typische Trocknungsmittel, die verwendet werden, sind Metallsalze (cyclo)aliphatischer, natürlicher oder synthetischer Säuren, wie z.B. Metallsalze der Linolsäure, Naphthensäure, Octansäure, 2-Ethylhexansäure, Ölsäure u.ä., wobei bevorzugt Metallsalze der Octansäure eingesetzt werden. Als geeignete Metalle sind dabei Cobalt, Mangan, Blei, Zirkon, Calcium, Zink und Wismut zu nennen. Wenn das Härtungsmittel ein Polyisocyanat ist, kann das Beschichtungsmittel 0,01 bis 2,5 Gew.-%, bezogen auf das Gewicht des filmbildenden Gemisches, mindestens eines Härtungskatalysators enthalten. Üblicherweise werden als Härtungskatalysator organometallische Verbindungen, wie beispielsweise Dibutylzinndilaurat, Zinkoctoat, Dibutylzinn-di-2-ethylhexoat, Zinn-II-octoat, Zinn-II-oleat, Zinknaphthenat, Vanadiumacetylacetonat oder Zirkoniumacetylacetonat, eingesetzt. Gleichfalls als Härtungskatalysator geeignet sind auch tertiäre Amine, wie z.B. Triethylendiamin, Pyridin, Dimethylanilin und Methylmorpholin. Der Härtungskatalysator kann entweder dem Stammlack oder der Härterkomponente zugesetzt werden.

Es wird angenommen, daß gerade durch die Kombination der beiden Härtungsmechanismen -der oxidativen Trocknung über das Polyesterharz a und der Isocyanatvernetzung über die Reaktion der Hydroxylgruppen der Bindemittelkomponenten - und Verschachtelung der beiden Netzwerke die Erfüllung des Anforderungsprofils erreicht wird. Hervorzuheben ist insbesondere noch die universelle Pigmentierbarkeit und Applizierbarkeit der Beschichtungsmittel, die durch alleinigen Einsatz der Bindemittelkomponente a in Verbindung mit Isocyanathärtern und Trockenstoffen nicht erreichbar ist.

Für die Pigmentierung der Beschichtungsmittel sind - wie bereits ausgeführt - alle handelsüblichen anorganischen und organischen Pigmente geeignet, beispielsweise Metalloxide, wie z.B. Titandioxid, Zinkoxid, Eisenoxide u. dgl., Metallhydroxide, Metallflocken, Metallpulver, Effektpigmente, Chromate, wie z.B. Bleichromat, Sulfide, Sulfate, Carbonate, Ruß, Eisenblau-Farbstoffe und organische Pigmente.

Die Pigmente werden in den erfindungsgemäßen Beschichtungsmitteln in üblichen Mengen, bevorzugt in einer Menge von 0 bis 40 Gew.-%, bevorzugt 2 bis 30 Gew.-%, bezogen auf das Gesamtgewicht des Beschichtungsmittels, eingesetzt.

Weiterhin können die erfindungsgemäßen Beschichtungsmittel noch Füllstoffe in üblichen Mengen, bevorzugt in einer Menge von 0 bis 40 Gew.-%, besonders bevorzugt 5 bis 20 Gew.-%, bezogen auf das Gesamtgewicht des Beschichtungsmittel, enthalten. Geeignete Füllstoffe sind beispielsweise natürliche oder synthetische Bariumsulfate, Aluminiumsilikate, Magnesiumsilikate, Kieselsäuren, Talkum, Glimmer, Kaolin, Kreide u.ä. Vorzugsweise wird zur Einstellung des Festkörpergehaltes und der Rheologieeinstellung synthetisches Bariumsulfat eingesetzt.

Wenn erforderlich, kann das Beschichtungsmittel weiterhin übliche Hilfs- und Zusatzstoffe in üblichen Mengen, bevorzugt 0,1 bis 5,0 Gew.-%, bezogen auf das Gesamtgewicht des Beschichtungsmittels, enthalten. Beispiele für geeignete Hilfs- und Zusatzstoffe sind Dispergierhilfsmittel, Antiabsetzmittel, Verlaufsmittel, Entschäumer, Stabilisatoren, Netzmittel u.ä. Insbesondere hinsichtlich der Entschäumung zeigt sich überraschenderweise, daß die erfindungsgemäßen Beschichtungsmittel bzw. die Bindemittelmischung von sich aus eine niedrige Schaumstabilisierung zeigen, so daß eine universelle Verarbeitbarkeit gegeben ist. Insbesondere tritt bei der Applikation nach dem Airless-Spritzverfahren und mit Hilfe einer Hochrotationsglocke die ansonsten für 2-Komponentenlacke typische Schaumbildung hier nur in untergeordnetem Maß auf.
Die erfindungsgemäßen Beschichtungsmittel zeichnen sich auch dadurch aus, daß sie mit einem hohen Feststoffgehalt verarbeitet werden können. Üblicherweise weisen die Beschichtungsmittel (einschl. Härterkomponente) einen Feststoffgehalt von > 60 %, bevorzugt > 65 %, auf. Entsprechend den unterschiedlichen Anforderungen an die Viskosität der Beschichtungsmittel bei den verschiedenen Applikationsverfahren schwankt der Lösemittelgehalt der verarbeitungsfertigen, erfindungsgemäßen Beschichtungsmittel. Werden die erfindungsgemäßen Beschichtungsmittel nach dem Airless-Spritzverfahren aufgebracht, so liegt die Verarbeitungsviskosität der Lacke im allgemeinen zwischen 18 und 20 s Auslaufzeit im DIN 4-Becher. Die erfindungsgemäßen Beschichtungsmittel weisen bei dieser Verarbeitungsviskosität von 18 bis 20 s Auslaufzeit im DIN 4-Becher bei 20°C üblicherweise einen Feststoffgehalt > 65 % auf.
Werden die erfindungsgemäßen Beschichtungsmittel nach anderen Verfahren aufgebracht, so kann die Verarbeitungsviskosität des Lacks durchaus höher liegen. Entsprechend höher ist auch der Feststoffgehalt der Beschichtungsmittel. Beispielsweise weisen die Beschichtungsmittel bei einer Verarbeitungsviskosität von 30 s nach DIN 53 211 (Hochrotationsglocke) üblicherweise einen Feststoffgehalt ≥ 70 % auf.

Für die Einstellung der Viskosität der erfindungsgemäßen Beschichtungsmittel sind insbesondere aliphatische und aromatische Kohlenwasserstoffe, wie z.B. Testbenzin, Solvent Naphtha®, verschiedene Solvesso®-und Shellsol®-Typen, Deasol, Xylol, Toluol u.ä. sowie Ester, wie z.B. Methoxipropylacetat, Butylacetat und Butylglykolacetat geeignet.

Die Herstellung der erfindungsgemäßen Beschichtungsmittel erfolgt üblicherweise durch Mischen und ggf. Dispergieren der einzelnen Komponenten. Bevorzugt werden die Beschichtungsmittel als 2-Komponentensystem formuliert. D. h. eine Lösung der Isocyanatkomponente liegt in einer Packung vor, und eine Lösung bzw. Dispersion der Bindemittelkomponente sowie der übrigen Bestandteile, wie z.B. Pigmente, liegt in einer getrennten Packung vor. Die beiden Lösungen bzw. Dispersionen werden sorgfältig unmittelbar vor dem Auftrag der Beschichtungsmittel vermischt. Die Trennung der beiden Komponenten ist gewöhnlich notwendig, da die sogenannte Topfzeit der Mischungen gering ist. Die Isocyanatkomponente reagiert nämlich gewöhnlich mit den Hydroxylgruppen des Bindemittels selbst bei Raumtemperatur mit großer Geschwindigkeit.

Anstelle des vorstehend beschriebenen Zweikomponentensystems kann auch ein Einkomponentensystem hergestellt werden, wenn die reaktiven Gruppen der Isocyanatkomponente mit einem Blockierungsmittel, wie z.B. Methylethylketoxim, Malonsäureestern u. ä., blockiert werden. Bei der Erwärmung der aufgetragenen Beschichtungsmittel während des Einbrennvorgangs auf Temperaturen von bis zu 140°C wird das Blockierungsmittel wieder freigesetzt, wodurch die Reaktion der Hydroxyl-gruppen des Bindemittels mit dem Polyester möglich wird. Allerdings sind derartige Beschichtungsmittel aufgrund der Notwendigkeit der Freisetzung des Blockierungsmittels nur unter forcierten Bedingungen härtbar.
Die Einarbeitung der Pigmente in die Beschichtungsmittel erfolgt nach den üblichen Methoden, z.B. durch Anmahlen der Pigmente mit einem Teil der eingesetzten Bindemittel.

Die erfindungsgemäßen Beschichtungsmittel sind universell applizierbar. Beispielsweise können sie nach dem Airless-Spritzverfahren, dem Air-Mix-Spritzverfahren, dem konventionellen Luftzerstäubungs-Spritzverfahren, mit Hilfe von Rotationszerstäubern, wie z.B. einer Hochrotationsglocke sowie durch Fluten, Walzen, Tauchen, Rakeln u. ä. aufgebracht werden.
Die Beschichtungsmittel werden üblicherweise entsprechend einer Trockenfilmschichtdicke zwischen 20 und 90 µm, bevorzugt 30 bis 45 µm, aufgebracht. Die erfindungsgemäßen Beschichtungsmittel erreichen bei Raumtemperatur innerhalb einer Zeit zwischen 2 und 4 h einen Trockengrad 6 nach DIN 53 150, durch forcierte Trocknung bei Temperaturen von bis zu 140°C wird dieser Trockengrad erheblich schneller erreicht. Die jeweils günstigsten Trockenbedingungen richten sich dabei nach der Art, Größe und Geometrie der zu beschichtenden Gegenstände.
Die Beschichtungsmittel können auf die unterschiedlichsten Substrate aufgebracht werden, wie z.B. Metall-, Holz-, Glas- und Kunststoffoberflächen, wobei die Beschichtungsmittel besonders für die Beschichtung von grundierten oder nicht grundierten Metallen oder Stahl geeignet sind. Typische Anwendungsgebiete sind die Beschichtung von glasfaserverstärkten Kunststoffen, Stahl, der mit Zinkphosphat oder Eisenphosphat behandelt wurde und von Metallsubstraten, die mit üblichen Alkyd- oder Epoxiprimern vorbeschichtet wurden, wie z.B. galvanisierter Stahl, chromatiertes Aluminium, Aluminium-Druckguß, Gußeisen u.ä.
Die erfindungsgemäßen Beschichtungsmittel auf der Basis aliphatischer Isocyanate werden aufgrund der besseren Witterungsbeständigkeit hauptsächlich für die Decklackierung im Industriebereich, wie z.B. für Maschinenteile und andere Gebrauchsgegenstände unterschiedlichster Größe und Geometrie, insbesondere zur Decklackierung von Großmaschinen, wie z.B. Landmaschinen, Baumaschinen, wie z.B. Kränen, Baggern, Schaufelladern u.ä. eingesetzt. Sie sind aber auch für den Bereich der Automobilserien- und -reparaturlackierung, den Bereich der Lastkraftwagenlackierung sowie für die Lackierung von Bahnausrüstungen u.ä. und als Grundierung im Industriebereich geeignet.

Beschichtungsmittel auf der Basis aromatischer Isocyanate werden hauptsächlich als Grundierung und als Deckbeschichtung im Bereich der Innenanwendungen, wie z.B. für die Beschichtung von Werkzeugen, Metallbearbeitungsmaschinen, Getränkeabfüllmaschinen und Werkzeugbearbeitungsmaschinen eingesetzt.

Die Erfindung wird nun anhand von Ausführungsbeispielen näher erläutert. Alle Angaben über Teile und Prozente sind dabei Gewichtsangaben, falls nicht ausdrücklich etwas anderes festgestellt wird.

### Beispiel 1

9 Teile eines handelsüblichen mittelöligen, lufttrocknenden Polesterharzes a auf Basis von Sojafettsäuren mit einem Ölgehalt/Triglyceridanteil von 46 % und einem Phthalsäureanhydridanteil von 22 % mit einer OH-Zahl (lösemittelfrei) von 75 mgKOH/g, einer Jodzahl (50 %ige Lösung) < 10 mgI₂/g, einer Säurezahl (lösemittelfrei) < 10 mgKOH/g und einer Viskosität (60 %ig in Xylol/Butylacetat 80 : 20 bei 20°) von 30 bis 40 s nach DIN 53 211, gelöst 80 %ig in Xylol/Butylacetat 1 : 1, 5,75 Teile eines verzweigten hydroxylgruppenhaltigen Polyesters b auf Basis Trimethylolpropan, Trimethylpentandiol-1,3, Hexahydrophthalsäureanhydrid und Phthalsäureanhydrid mit einem Gehalt von mindestens 15 Mol-% Trimethylolpropan, einer Säurezahl (lösemittelfrei) von 10 bis 14 mgKOH/g, einer OH-Zahl (lösemittelfrei) von 132 mgKOH/g und einer Viskosität von 3,3 bis 4,5 dPas bei 23°C (60 %ige Lösung in Solvent Naphtha®), 5,25 Teile eines mit synthetischen Fettsäuren modifizierten Polyesters c mit einer OH-Zahl (lösemittelfrei) von 120 mgKOH/g, einer Säurezahl (lösemittelfrei) von 5 bis 10 mgKOH/g und einer Viskosität von 5,8 bis 6,5 dPas bei 23°C (70 %ige Lösung in Solvent Naphtha®), gelöst 80%ig in Solvent Naphtha®, 0,4 Teile eines handelsüblichen Entlüfters, 0,5 Teile eines handelsüblichen Netzmittels, 0,9 Teile eines handelsüblichen Verlaufsmittel, 0,4 Teile eines handelsüblichen Anti-Absetzmittels, 25 Teile Titandioxid vom Rutil-Typ, 2 Teile Eisenoxidschwarz, 10 Teile synthetisches Bariumsulfat, 3 Teile Xylol und 1 Teil Butylglykolacetat werden vordispergiert und anschließend auf eine Hegman-Feinheit von 8 µm gemahlen. Diese Mischung wird unter Rühren mit 28 Teilen des obenbeschriebenen Polyesterharzes a, 1,3 Teilen einer Trockenstoffmischung aus 0,4 Teilen Cobaltoctoat-Lösung (50 %ig in Testbenzin) und 0,9 Teilen Bleioctoat-Lösung (60 %ig in Testbenzin), entsprechend einem Gehalt von 0,08 % Cobalt und 0,73 % Blei, jeweils bezogen auf den Festkörperanteil des Polyesterharzes a, 0,2 Teilen eines handelsüblichen Antihautmittels 1,25 Teilen Testbenzin 145/200°, 0,1 Teilen eines handelsüblichen Beschleunigers, 1,0 Teilen einer Lichtschutzmittelkombination, 1,25 Teilen l-Methoxipropylacetat-2 und 3,70 Teilen Butylglykolacetat versetzt und zu einer homogenen Mischung verarbeitet. Die so erhaltene Lackkomponente I-1 weist einen Feststoffgehalt von 77 % sowie eine Viskosität ≤ 60 s nach DIN 53 211 auf. 100 Teile dieser Lackkomponente I-1 werden mit 32 Teilen einer Härterkomponente II-1 (Festkörpergehalt 38,3 %, Viskosität 12 - 14 s nach DIN 53 211) vermischt (OH:NCO-Äquivalentverhältnis = 1:1). Als Härterkomponente II-1 wird eine Mischung aus 23 Teilen eines handelsüblichen aliphatischen Polyisocyanates (100%ig) mit einem NCO-Gehalt von 23 %, einer Viskosität von 2500 mPas ± 1000 mPas bei 23°C und einem Äquivalentgewicht von 183, 21,6 Teilen einer handelsüblichen Lösung eines aliphatischen Polyisocyanates (70 %ig in Solvesso 100®) mit einem NCO-Gehalt von 11,5 %, bezogen auf die 70%ige Lösung, einer Viskosität von 2500 mPas ± 1000 mPas bei 23°C und einem Äquivalentgewicht von 365, 0,36 Teilen eines handelsüblichen Stabilisierungsmittels auf Basis eines Monoisocyanates und 55,4 Teilen einer Lösungsmittelmischung aus 27,1 Teilen Solvesso® 150, 61,74 Teilen Xylol und 10,80 Teilen Butylglykolacetat eingesetzt.

Das so erhaltene Beschichtungsmittel 1 weist einen Feststoffgehalt von 67,6 % und eine Viskosität von 18 - 20 s nach DIN 53 211 auf.
Phosphatierte Stahlbleche werden mit einer handelsüblichen 1-Komponenten-Grundierung auf Basis Epoxiester (Trockenfilmschichtdicke 25 - 35 µm) versehen. Auf diese ausgehärtete Grundierung wird nun das Beschichtungsmittel 1 nach dem Airless-Spritzverfahren elektrostatisch appliziert (Trockenfilmschichtdicke 35 - 45 µm). Das Beschichtungsmittel 1 zeigt dabei ein gutes Spritznebelaufnahmeverhalten (Spritznebelaufnahme max. 30 min).
Das Beschichtungsmittel kann auch problemlos mit dem Air-Mix-Spritzverfahren, dem konventionellen Spritzen mit Luftzerstäubung und mit Hilfe der Hochrotationsglocke aufgebracht werden.

Bei Raumtemperatur wird der Trockengrad 6 nach DIN 53 150 nach 3 bis 4 h erreicht. Bei einer forcierten Trocknung von 80°C während einer Zeit von 20 min und anschließender Lagerung bei Raumtemperatur wird der Trockengrad 6 nach DIN 53 150 bereits nach 1 h erreicht.
Nach einer Lagerung von 7 bis 10 Tagen bei Raumtemperatur werden die erhaltenen Beschichtungen verschiedenen Prüfungen unterzogen. Es werden folgende Ergebnisse erreicht:
Glanz (nach Gardner, 20° Winkel): ≥ 80
Erichsentiefung: 7 mm
Kugelstrahltest nach DIN 59 154: 8000
Buchholzhärte ASTM D 3363: > 100
Pendelhärte nach König: ≥ 100 s
Dehnfähigkeit konischer Dorn ASTMD 522:> 32 %
Schwitzwasserkonstantklima nach DIN 50 017: 288 h i.O. (Beurteilung des Blasengrades nach
DIN 53 209 und des Rostgrades nach 53 210 : m2g2)
Salzsprühtest DIN 50 021: 240 h i.O.
(Beurteilung des Blasengrades nach DIN 53 209 und des Rostgrades nach DIN 53 210: m2g2)
Waschmittelbeständigkeit¹⁾ gegenüber einer 1 %igen Lösung, pH-Wert 12, 15 min. 80°C: gut
Hydraulikölbeständigkeit²⁾ bei 120°C: 100 h
Wasserlagerung³⁾: 100 h
Benzinfestigkeit⁴⁾: gut
Lösungsmittelfestigkeit⁵⁾: gut
Witterungsbeständigkeit (2000 h Weather-o-meter) :
Glanzabfall ≤ 20 %
Farbtonabweichung ΔE (nach CIE-Richtlinien): ≤ 1
   1) Die Waschmittelbeständigkeit wurde geprüft, indem das Prüfblech nach entsprechender Alterung (10 Tage Raumtemperatur) sowohl in eine 1 %ige alkalische Waschlösung mit einem pH-Wert von 11-12, als auch in eine 1 %ige, leicht saure Waschlösung (Eisenphosphatierung, pH-Wert 4-5) 15 min lang bei 80°C getaucht wird.
   2) Die Hydraulikölbeständigkeit wurde geprüft, indem das Prüfblech nach Alterung (10 d) in Getriebe-Hydrauliköl (z.B. Typ Fluid 41 der Firma Shell) über 100 Std. bei einer Temperatur von 135°C eingetaucht wird.
   3) Bei der Wasserlagerungs-Prüfung wurde untersucht, ob nach 100stündiger Lagerung bei Raumtemperatur in destilliertem Wasser Bläschen oder Roststellen sichtbar sind.
   4) Die Benzinfestigkeit wurde geprüft, indem Superbenzin auf den Prüfling getropft wird. Beurteilt wird das Anlösen oder Hochsetzen der Beschichtung. Das Benzin wirkt dabei solange ein, bis das Benzin verdunstet ist, längstens 45 min.
   5) Die Lösungsmittelfestigkeit wurde gerüft, indem verschiedene Lösungsmittel auf den Prüfling getropft werden. Beurteilt wird das Anlösen oder Hochsetzen der Beschichtung. Das Lösungsmittel wirkt dabei auf die Beschichtung während der Zeit, bis das Lösungsmittel verdunstet ist, längstens aber für 45 min.

Folgende Lösungsmittel wurden geprüft:
Benzin 180/210 - Benzin 145/200
Solvesso® 150
n-Butylacetat 98 %ig
Methoxipropylacetat
Lösungsbenzol
Isobutanol
Xylol
Butylglykolacetat

### Beispiel 2

Es wird analog Beispiel 1 eine Lackkomponente I-1 mit einem Feststoffgehalt von 77 % und einer Viskosität ≥ 60 s nach DIN 53 211 hergestellt.
100 Teile dieser Lackkomponente I-1 werden mit 26 Teilen einer Härterkomponente II-2 (Viskosität 13-16 s nach DIN 53 211) vermischt (OH:NCO-Äquivalentverhältnis = 1 : 1).

Als Härterkomponente II-2 wird eine Mischung aus 23 Teilen eines handelsüblichen aliphatischen Polyisocyanates (100 %ig) mit einem NCO-Gehalt von 23 %, einer Viskosität von 2500 mPas ± 1000 mPas bei 23°C und einem Äquivalentgewicht von 183, 23 Teilen eines handelsüblichen aliphatischen Polyisocyanates (100 %ig) mit einem NCO-Gehalt von 20 bis 23 % und einer Viskosität von 130 bis 160 mPas bei 23°C sowie 54 Teilen einer Lösungsmittelmischung aus 14,15 Teilen Solvesso® 150, 56,60 Teilen Xylol, 10,40 Teilen Lösungsbenzol, 9,4 Teilen Butylglykolacetat und 9,45 Teilen Butyldiglykolacetat eingesetzt.
Das so erhaltene Beschichtungsmittel 2 weist einen Feststoffgehalt von ca. 72 % und eine Viskosität von 22 bis 25 s nach DIN 53 211 auf.
Die Applikation dieses Beschichtungsmittels 2 erfolgt analog zu Beispiel 1 auf phosphatierte und mit einer handelsüblichen 1-K-Grundierung auf Basis Epoxiester versehene Stahlbleche.
Bei Raumtemperatur wird der Trockengrad 6 nach DIN 53150 nach 3 bis 4 h erreicht. Bei einer forcierten Trocknung von 80°C während einer Zeit von 20 min und anschließender Lagerung bei Raumtemperatur wird der Trockengrad 6 nach DIN 53 150 bereits nach 1 h erreicht.

Nach einer Lagerung von 7 bis 10 Tagen bei Raumtemperatur werden die erhaltenen Beschichtungen analog Beispiel 1 verschiedenen Prüfungen unterzogen. Es werden folgende Ergebnisse erreicht:
Glanz (nach Gardner, 20° Winkel): ≥ 80
Erichsentiefung: 7 mm
Kugelstrahltest nach DIN 59 154: 8000
Buchholzhärte ASTM D 3363: > 100
Pendelhärte nach König: ≥ 100 s
Dehnfähigkeit konischer Dorn ASTMD 522: > 32 %
Schwitzwasserkonstantklima nach DIN 50 017: 288 h i.O. (Beurteilung des Blasengrades nach
DIN 53 209 und des Rostgrades nach 53 210 : m2g2)
Salzsprühtest DIN 50 021: 240 h i.O.
(Beurteilung des Blasengrades nach DIN 53 209 und des Rostgrades nach DIN 53 210: m2g2)
Waschmittelbeständigkeit¹⁾ gegenüber einer 1 %igen Lösung, pH-Wert 12, 15 min. 80°C: gut
Hydraulikölbeständigkeit²⁾ bei 120°C: 100 h
Wasserlagerung³⁾: 100 h
Benzinfestigkeit⁴⁾ : gut
Lösungsmittelfestigkeit⁵⁾: gut
Witterungsbeständigkeit (2000 h Weather-o-meter) ; Glanzabfall ≤ 20 %
Farbtonabweichung ΔE (nach CIE-Richtlinien) ≤ 1

### Beispiel 3

9 Teile des in Beispiel 1 beschriebenen handelsüblichen Polyesterharzes a (80 %ig), 5,75 Teile des in Beispiel 1 beschriebenen verzweigten Polyesters b (73 %ig), 5,25 Teile des in Beispiel 1 beschriebenen modifizierten Polyesters c (80 %ig), 0,4 Teile eines handelsüblichen Entlüfters, 0,5 Teile eines handelsüblichen Netzmittels, 0,90 Teile eines handelsüblichen Verlaufsmittels und 0,4 Teile eines handelsüblichen Anti-Absetzmittels, 16 Teile Chromoxidgrün, 7 Teile Titandioxid vom Rutil-Typ,
15 Teile synthetisches Bariumsulfat,
3 Teile Xylol und 1 Teil Butylglykolacetat werden vordispergiert und anschließend auf eine Hegman-Feinheit von 10 µm gemahlen. Diese Mischung wird unter Rühren mit 28 Teilen des in Beispiel 1 beschriebenen Polyesterharzes a, 0,7 Teilen einer Trockenstoffmischung aus 0,2 Teilen einer Cobaltoctoat-Lösung, 50 %ig in Testbenzin, und 0,7 Teilen einer Bleioctoat-Lösung, 60 %ig in Testbenzin, entsprechend einem Gehalt von 0,04 % Cobalt und 0,4 % Blei, jeweils bezogen auf den Festkörperanteil des Polyesterharzes a, 0,2 Teilen Antihautmittel, 1,40 Teilen Benzin 145/200, 1,40 Teilen 1-Methoxipropylacetat-2 und 4,10 Teilen Butylglykolacetat versetzt und zu einer homogenen Mischung verarbeitet. Die so erhaltene Lackkomponente I-2 weist einen Feststoffgehalt von ca. 77 % sowie eine Viskosität ≤ 80 s nach DIN 53 211 auf.
100 Teile dieser Lackkomponente I-2 werden mit 17 Teilen einer Lösung eines aromatischen Polyisocyanates (aus 66 Teilen der handelsüblichen Lösung eines aromatischen Isocyanates mit einem NCO-Gehalt von 17,3 % und einem Äquivalentgewicht von 243, jeweils bezogen auf reines Isocyanat, 24 Teilen Xylol, 5 Teilen Benzin 145/200 und 5 Teilen Methoxipropylacetat) mit einem NCO-Gehalt von 7,5 %, einer Viskosität von 13 bis 15 s nach DIN 53 211 und einem Äquivalentgewicht von 560, jeweils bezogen auf die 44 %ige Lösung, versetzt (OH : NCO-Äquivalentverhältnis = 1 : 0,5).

Das so erhaltene Beschichtungsmittel 3 weist einen Feststoffgehalt von ca. 70 % und eine Viskosität von 23 bis 28 s nach DIN 53 211 auf.
Dieses Beschichtungsmittel 3 wird mittels des Airless-Spritzverfahrens elektrostatisch auf phosphatierte Stahlbleche, die zuvor mit einer 1-Komponenten-Grundierung auf Basis Epoxiester (Trockenfilmschichtdicke 25 µm) versehen wurden, appliziert (Trockenfilmschichtdicke 35 µm). Das Beschichtungsmittel 3 zeigt dabei ein gutes Spritznebelaufnahmeverhalten (Spritznebelaufnahme max. 30 min).
Das Beschichtungsmittel kann auch problemlos mit dem Air-Mix-Spritzverfahren, dem konventionellen Spritzen mit Luftzerstäubung und mit Hilfe der Hochrotationsglocke aufgebracht werden.

Bei Raumtemperatur wird der Trockengrad 6 nach DIN 53 150 nach 2 h erreicht. Bei einer forcierten Trocknung von 80°C während einer Zeit von 20 min und anschließender Lagerung bei Raumtemperatur wird der Trockengrad 6 nach DIN 53 150 bereits nach 30 min erreicht.

Nach einer Lagerung von 7 bis 10 Tagen bei Raumtemperatur werden die erhaltenen Beschichtungen verschiedenen Prüfungen unterzogen. Es werden folgende Ergebnisse erzielt:
Glanz (nach Gardner, 60° Winkel) ≥ 80
Erichsentiefung:4 mm
Buchholzhärte ASTM D 3363: ≥ 100
Pendelhärte nach König:≥ 100 s
Schwitzwasserkonstantklima nach DIN 50 017: 192 h i.O. (Beurteilung des Blasengrades nach DIN 53 209 und des Rostgrades nach DIN 53 210: m2g2)
Salzsprühtest DIN 50 021: 168 h i.O.
(Beurteilung des Blasengrades nach DIN 53 209 und des Rostgrades nach DIN 53 210: m2g2)

Außerdem zeichnen sich die Beschichtungen durch gute Beständigkeiten gegenüber aggressiven Kühlmitteln (z.B. Syntilo R der Firma Castrol), Bohr-Emulsionen sowie Schmier- und Hydraulikölen aus. Die Beschichtungen sind außerdem gegenüber heißen Drehspänen widerstandsfähig und können mit den üblichen Reinigungsund Lösemitteln gereinigt werden. Schließlich sind sie unempfindlich gegenüber schwachen Alkalilaugen, fettbeständig, wasserfest und haltbar gegenüber Fruchtsäften und Alkohol.

### Beispiel 4

11,60 Teile des in Beispiel 1 beschriebenen Polyesterharzes a (80 %ig), 5,90 Teile des in Beispiel 1 beschriebenen verzweigten Polyesters b (73 %ig), 6,0 Teile des in Beispiel 1 beschriebenen modifizierten Polyesters c, 0,4 Teile eines handelsüblichen Entlüfters, 2,50 Teile 1-Methoxipropylacetat-2, 2,0 Teile eines handelsüblichen Netzmittels, 0,9 Teile eines handelsüblichen Verlaufsmittels, 0,60 Teile eines handelsüblichen Anti-Absetzmittels, 1,80 Teile Titandioxid vom Rutil-Typ, 11 Teile synthetisches Bariumsulfat, 4,50 Teile Chromgelb, 2,80 Teile Eisenoxidgelb, 2,40 Teile Eisenoxidrot, 1,10 Teile Ruß, 1 Teil Xylol und 3 Teile Butylglykolacetat werden vordispergiert und anschließend auf eine Hegman-Feinheit von 5 bis 8 µm gemahlen. Diese Mischung wird unter Rühren mit 27,60 Teilen des in Beispiel 1 beschriebenen Polyesterharzes a (80 %ig), 0,45 Teilen einer Cobaltoctoat-Lösung (50 %ig in Testbenzin) und 1,0 Teilen Bleioctoat-Lösung (60 %ig in Testbenzin), entsprechend einem Gehalt von 0,08 % Cobalt und 0,8 % Blei, jeweils bezogen auf den Festkörperanteil des Polyesterharzes a, 0,2 Teilen Antihautmittel, 0,10 Teilen Beschleuniger, 2,50 Teilen Benzin 145/200°, 1,50 Teilen Solvesso® 150, 7,0 Teilen Butylglykolacetat und 2,15 Teilen Xylol versetzt und zu einer homogenen Mischung verarbeitet.
Die so erhaltene Lackkomponente I-3 weist einen Feststoffgehalt von ca. 68 % sowie eine Viskosität von 45 bis 55 s nach DIN 53 211 auf.
100 Teile dieser Lackkomponente I-3 werden mit 29 Teilen der in Beispiel 2 beschriebenen Härterkomponente II-2 vermischt (OH : NCO-Äquivalentverhältnis 1 : 1,1).
Das so erhaltene Beschichtungsmittel 4 weist einen Feststoffgehalt von 64 % und eine Viskosität von 20 bis 22 s nach DIN 53 211 auf.

Die Applikation dieses Beschichtungsmittels 4 erfolgt analog zu Beispiel 1 auf phosphatierte und mit einer handelsüblichen 1-K-Grundierung auf Basis Epoxiester versehene Stahlbleche.
Bei Raumtemperatur wird der Trockengrad 6 nach DIN 53150 nach 3 bis 4 h erreicht. Bei einer forcierten Trocknung von 80°C während einer Zeit von 20 min und anschließender Lagerung bei Raumtemperatur wird der Trockengrad 6 nach DIN 53150 bereits nach 1 h erreicht.
Nach einer Lagerung von 7 bis 10 Tagen bei Raumtemperatur werden die erhaltenen Beschichtungen analog Beispiel 1 verschiedene Prüfungen unterzogen. Es werden folgende Ergebnisse erreicht:
Glanz (nach Gardner, 20° Winkel): ≥ 80
Erichsentiefung: 7 mm
Kugelstrahltest nach DIN 59 154: 8000
Buchholzhärte ASTM D 3363: > 100
Pendelhärte nach König: ≥ 100 s
Dehnfähigkeit konischer Dorn ASTMD 522 > 32 % Schwitzwasserkonstantklima nach DIN 50 017: 288 h i.O. (Beurteilung des Blasengrades nach
DIN 53 209 und des Rostgrades nach 53 210 : m2g2) Salzsprühtest DIN 50 021: 240 h i.O.
(Beurteilung des Blasengrades nach DIN 53 209 und des Rostgrades nach DIN 53 210: m2g2)
Waschmittelbeständigkeit¹⁾ gegenüber einer 1 %igen Lösung, pH-Wert 12, 15 min. 80°C: gut
Hydraulikölbeständigkeit²⁾ bei 120°C: 100 h
Wasserlagerung³⁾: 100 h
Benzinfestigkeit⁴⁾: gut
Lösungsmittelfestigkeit⁵⁾: gut
Witterungsbeständigkeit (2000 h Weather-o-meter) : Glanzabfall ≤ 20 %
Farbtonabweichung ΔE (nach CIE-Richtlinien) ≤ 1

### Vergleichsbeispiel 1

19 Teile des in Beispiel 1 beschriebenen Polyesterharzes a (80 %ig), 0,4 Teile eines handelsüblichen Entlüfters, 0,5 Teile eines handelsüblichen Netzmittels, 0,9 Teile eines handelsüblichen Verlaufsmittels, 0,6 Teile eines handelsüblichen Antiabsetzmittels, 2,5 Teile Titandioxid vom Rutil-Typ, 10,3 Teile anorganisches Gelbpigment, 3 Teile organisches Gelbpigment, 14 Teile synthetisches Bariumsulfat, 0,1 Teile organisches Orangepigment, 4,5 Teile Methoxipropylacetat und 3 Teile Xylol werden vordispergiert und anschließend auf eine Hegman-Feinheit von 8 µm gemahlen. Diese Mischung wird unter Rühren mit 31 Teilen des obenbeschriebenen Polyesterharzes a, 1,45 Teilen einer Trockenstoffmischung aus 0,45 Teilen Cobaltoctoat-Lösung (50 %ig in Testbenzin) und 1 Teil Bleioctoat-Lösung (60 %ig in Testbenzin), entsprechend einem Gehalt von 0,07 % Cobalt und 0,6 % Blei, jeweils bezogen auf den Festkörperanteil des Polyesterharzes a, 0,2 Teilen eines handelsüblichen Antihautmittels, 0,1 Teilen eines handelsüblichen Beschleunigers und 8,45 Teilen Xylol versetzt und zu einer homogenen Mischung verarbeitet. Die so erhaltene Lackkomponente I-Vl weist einen Feststoffgehalt von 73 % sowie eine Viskosität ≤ 85s nach DIN 53 211 auf.
100 Teile dieser Lackkomponente I-Vl werden mit 29 Teilen der in Beispiel 1 beschriebenen Härterkomponente II-1 (Festkörpergehalt 38,3 %) vermischt (OH: NCO-Äquivalentverhältnis = 1 : 1). Das so erhaltene Beschichtungsmittel V1 weist einen Feststoffgehalt von ca. 65 % und eine Viskosität von 25 - 35 s nach DIN 53 211 auf.
Dieses Beschichtungsmittel wird auf phosphatierte Stahlbleche, die zuvor mit einer 1-Komponenten-Grundierung auf Basis Epoxiester versehen wurden (Trockenfilmschichtdicke 25 µm), appliziert (Trockenfilmschichtdicke 25 - 35 µm). Die Applikation des Beschichtungsmittels V1 erfolgt dabei nach den unterschiedlichsten Methoden, wobei Farbtonunterschiede bei verschiedener Applikation (elektrostatisch oder pneumatisch usw.) beobachtet werden. Im Vergleich zum Beschichtungsmittel 1 des Beispiels 1 zeigt dieses Beschichtungsmittel V1 des Vergleichsbeispiels 1 außerdem eine kürzere Spritznebelaufnahmezeit und eine schlechtere Standfähigkeit, die eine höhere Viskosität bedingt. Außerdem ist keine problemlose Entschäumung des Beschichtungsmittels V1 bei den verschiedenen Applikationsverfahren möglich. Außerdem weisen die resultierenden Beschichtungen eine geringere Witterungsbeständigkeit als die Beschichtungen des Beispiels 1 (höherer Glanzabfall und höhere Farbtonabweichung als im Beispiel 1) sowie geringere Erichsen-Tiefungswerte sowie eine geringere Härte nach DIN 53 153 auf.

### Vergleichsbeispiel 2

20 Teile des in Beispiel 1 beschriebenen Polyesterharzes a (80 %ig), 0,4 Teile eines handelsüblichen Entlüfters, 0,5 Teile eines handelsüblichen Netzmittels, 0,9 Teile eines handelsüblichen Verlaufsmittels, 0,4 Teile eines handelsüblichen Antiabsetzmittels, 25 Teile Titandioxid vom Rutil-Typ, 2 Teile Eisenoxidschwarz, 10 Teile synthetisches Bariumsulfat, 1 Teil Butylglykolacetat und 3 Teile Xylol werden vordispergiert und anschließend auf eine Hegman-Feinheit von 8 µm gemahlen. Diese Mischung wird unter Rühren mit 28 Teilen des obenbeschriebenen Polyesterharzes a, 1,3 Teilen einer Trockenstoffmischung aus 0,4 Teilen Cobaltoctoat-Lösung (50 %ig in Testbenzin) und 0,9 Teile Bleioctoat-Lösung (60 %ig in Testbenzin), entsprechend einem Gehalt von 0,062 % Cobalt und 0,59 % Blei, jeweils bezogen auf den Festkörperanteil des Polyesterharzes a, 0,2 Teilen eines handelsüblichen Antihautmittels, 1,0 Teilen einer Lichtschutzmittelkombination, 0,1 Teilen eines handelsüblichen Beschleunigers, 1,25 Teilen Benzin 145/200, 1,25 Teilen Methoxipropylacetat und 3,75 Teilen Butylglykolacetat versetzt und zu einer homogenen Mischung verarbeitet. Die so erhaltene Lackkomponente I-V2 weist einen Feststoffgehalt von 78 % sowie eine Viskosität ≤ 80s nach DIN 53 211 auf.
100 Teile dieser Lackkomponente I-V2 werden mit 28 Teilen der in Beispiel 1 beschriebenen Härterkomponente II-1 (Festkörpergehalt 38,3 %) vermischt (OH: NCO-Äquivalentverhältnis = 1 : 1). Das so erhaltene Beschichtungsmittel V2 weist einen Feststoffgehalt von ca. 67 % und eine Viskosität von 25 - 35 s nach DIN 53 211 auf.
Dieses Beschichtungsmittel wird auf phosphatierte Stahlbleche, die zuvor mit einer 1-Komponenten-Grundierung auf Basis Epoxiester versehen wurden (Trockenfilmschichtdicke 25 µm), appliziert (Trockenfilmschichtdicke 25 - 35 µm). Die Applikation des Beschichtungsmittels V2 erfolgt dabei nach den unterschiedlichsten Methoden, wobei Farbtonunterschiede bei verschiedener Applikation (elektrostatisch oder pneumatisch usw.) beobachtet werden. Im Vergleich zum Beschichtungsmittel 1 des Beispiels 1 zeigt dieses Beschichtungsmittel V2 des Vergleichsbeispiels 2 außerdem eine kürzere Spritznebelaufnahmezeit und eine schlechtere Standfähigkeit, die eine höhere Viskosität bedingt. Außerdem ist keine problemlose Entschäumung des Beschichtungsmittels V2 bei den verschiedenen Applikationsverfahren möglich. Außerdem weisen die resultierenden Beschichtungen eine geringere Witterungsbeständigkeit als die Beschichtungen des Beispiels 1 (höherer Glanzabfall und höhere Farbtonabweichung als im Beispiel 1) sowie geringere Erichsen-Tiefungswerte sowie eine geringere Härte nach DIN 53 153 auf.

## Patentansprüche

1. Beschichtungsmittel, das eine Bindemittelkomponente auf Polyesterbasis und eine Härterkomponente auf Isocyanatbasis enthält, dadurch gekennzeichnet, daß das Beschichtungsmittel als Bindemittel eine Mischung aus
a) 30 bis 94 Gew.-% mindestens eines hydroxylgruppenhaltigen Polyesterharzes mit einer OH-Zahl von 40 bis 140 mgKOH/g und einem Ölgehalt von 25 bis 57 %,
b) 3 bis 50 Gew.-% mindestens eines verzweigten hydroxylgruppenhaltigen Polyesters auf der Basis cycloaliphatischer und/oder aromatischer Di- und/oder Polycarbonsäuren mit einer OH-Zahl von 100 bis 200 mgKOH/g und einem Gehalt an tri- und/oder höherfunktionellen Alkoholen und/oder Carbonsäuren von mindestens 15 Mol-%, bezogen auf den Gesamtgehalt an Alkoholen und Carbonsäuren, und
c) 3 bis 50 Gew.-% mindestens eines mit synthetischen Fettsäuren modifizierten Polyesters mit einer OH-Zahl von 80 bis 150 mgKOH/g und einem Gehalt an synthetischen Fettsäuren von 35 bis 50 Gew.-%, bezogen auf das Gewicht des modifizierten Polyesters, enthält, wobei die Summe der Gewichtsanteile der Komponenten a bis c jeweils 100 Gew.-% beträgt.

2. Beschichtungsmittel nach Anspruch 1, dadurch gekennzeichnet, daß das Beschichtungsmittel als Bindemittel eine Mischung aus
a) 70 bis 90 Gew.-% mindestens eines hydroxylgruppenhaltigen Polyesterharzes mit einer OH-Zahl von 40 bis 140 mgKOH/g und einem Ölgehalt von 25 bis 57 %,
b) 5 bis 15 Gew.-% mindestens eines verzweigten hydroxylgruppenhaltigen Polyesters auf der Basis cycloaliphatischer und/oder aromatischer Di- und/oder Polycarbonsäuren mit einer OH-Zahl von 100 bis 200 mgKOH/g und einem Gehalt an tri- und/oder höherfunktionellen Alkoholen und/oder Carbonsäuren von mindestens 15 Mol-%, bezogen auf den Gesamtgehalt an Alkoholen und Carbonsäuren, und
c) 5 bis 15 Gew.-% mindestens eines mit synthetischen Fettsäuren modifizierten Polyesters mit einer OH-Zahl von 80 bis 150 mgKOH/g und einem Gehalt an synthetischen Fettsäuren von 35 bis 50 Gew.-%, bezogen auf das Gewicht des modifizierten Polyesters, enthält, wobei die Summe der Gewichtsanteile der Komponenten a bis c jeweils 100 Gew.-% beträgt.

3. Beschichtungsmittel nach Anspruch 1 oder 2, dadurch gekennzeichnet, daß das Beschichtungsmittel als Komponente a mindestens ein hydroxylgruppenhaltiges Polyesterharz mit einer OH-Zahl von 50 bis 90 mgKOH/g und einem Ölgehalt von 40 bis 50 % und/oder als Komponente b mindestens einen verzweigten hydroxylgruppenhaltigen Polyester auf der Basis cycloaliphatischer und/oder aromatischer Di- und/oder Polycarbonsäuren mit einer OH-Zahl von 115 bis 150 mgKOH/g und/oder als Komponente c mindestens einen mit synthetischen Fettsäuren modifizierten Polyester mit einer OH-Zahl von 115 bis 130 mgKOH/g enthält.

4. Beschichtungsmittel nach einem der Ansprüche 1 bis 3, dadurch gekennzeichnet, daß das Beschichtungsmittel zusätzlich organisches Lösungsmittel, ggf. Pigmente und/oder Füllstoffe sowie weitere übliche Hilfs- und Zusatzstoffe enthält.

5. Beschichtungsmittel nach einem der Ansprüche 1 bis 4, dadurch gekennzeichnet, daß das Beschichtungsmittel eine Viskosität von 18 bis 20 s bei einer Temperatur von 20°C bei einem Feststoffgehalt von mindestens 60 Gew.-% aufweist.

6. Beschichtungsmittel nach einem der Ansprüche 1 bis 5, dadurch gekennzeichnet, daß das Beschichtungsmittel mindestens ein aliphatisches und/oder cycloaliphatisches Polyisocyanat mit einem NCO-Gehalt von 18 bis 25 % und einer Viskosität von 100 bis 200 mPas bei 20°C, jeweils bezogen auf das Isocyanat ohne Lösungsmittelanteil sowie ggf. weiteres Di- und/oder Polyisocyanat als Härter enthält.

7. Beschichtungsmittel nach einem der Ansprüche 1 bis 6, dadurch gekennzeichnet, daß das Beschichtungsmittel mindestens ein aliphatisches Di- und/oder Polyisocyanat als Härter enthält und der Härter in solchen Mengen enthalten ist, daß das Äquivalentverhältnis der Hydroxylgruppen des Bindemittels zu den Isocyanatgruppen des Härters zwischen 1 : 1 und 1 : 1,1 liegt.

8. Beschichtungsmittel nach einem der Ansprüche 1 bis 5, dadurch gekennzeichnet, daß das Beschichtungsmittel mindestens ein aromatisches Diund/oder Polyisocyanat als Härter enthält und der Härter in solchen Mengen enthalten ist, daß das Äquivalentverhältnis der Hxdroxylgruppen des Bindemittels zu den Isocyanatgruppen des Härters zwischen 1 : 0,5 und 1 : 0,8 liegt.

9. Verfahren zur Herstellung der Beschichtungsmittel nach einem der Ansprüche 1 bis 8, dadurch gekennzeichnet, daß das Beschichtungsmittel durch Mischen und ggf. Dispergieren einer Lackkomponente I, die die Bindemittel enthält und einer Lackkomponente II, die den Härter enthält, hergestellt wird.

10. Verfahren zum Beschichten von Kunststoffen und metallischen Substraten, dadurch gekennzeichnet, daß ein Beschichtungsmittel nach einem der Ansprüche 1 bis 8 aufgebracht wird.

11. Verwendung der Beschichtungsmittel nach Anspruch 7 zur Decklackierung und als Grundierung im Industriebereich, insbesondere zur Decklackierung von Großmaschinen.

12. Verwendung der Beschichtungsmittel nach Anspruch 8 als Grundierung im Industriebereich und zur Decklackierung im Bereich der Innenanwendungen.

## Claims

1. Coating composition which contains a polyester-based binder component and an isocyanate-based curing agent component, characterized in that the coating composition contains as binder a mixture of
a) 30 to 94 % by weight of at least one hydroxyl-containing polyester resin having a hydroxyl value of 40 to 140 mg of KOH/g and an oil content of 25 to 57 %,
b) 3 to 50 % by weight of at least one branched hydroxyl-containing polyester based on cyclo-aliphatic and/or aromatic dicarboxylic and/or polycarboxylic acids having a hydroxyl value of 100 to 200 mg of KOH/g and a content of trifunctional and/or higher-functional alcohols and/or carboxylic acids of at least 15 mol %, based on the total content of alcohols and carboxylic acids, and
c) 3 to 50 % by weight of at least one polyester modified by synthetic fatty acids, having a hydroxyl value of 80 to 150 mg of KOH/g and a synthetic fatty acid content of 35 to 50 % by weight, based on the weight of the modified polyester, the sum of the amounts by weight of the components a to c being in each case 100 % by weight.

2. Coating composition according to Claim 1, characterized in that the coating composition contains as binder a mixture of
a) 70 to 90 % by weight of at least one hydroxyl-containing polyester resin having a hydroxyl value of 40 to 140 mg of KOH/g and an oil content of 25 to 57 %,
b) 5 to 15 % by weight of at least one branched hydroxyl-containing polyester based on cyclo-aliphatic and/or aromatic dicarboxylic and/or polycarboxylic acids having a hydroxyl value of 100 to 200 mg of KOH/g and a content of trifunctional and/or high-functional alcohols and/or carboxylic acids of at least 15 mol %, based on the total content of alcohols and carboxylic acids, and
c) 5 to 15 % by weight of at least one polyester modified by synthetic fatty acids, having a hydroxyl value of 80 to 150 mg of KOH/g and a synthetic fatty acid content of 35 to 50 % by weight, based on the weight of the modified polyester, the sum of the amounts by weight of the component a to c being in each case 100 % by weight.

3. Coating composition according to Claim 1 or 2, characterized in that the coating composition contains at least one hydroxyl-containing polyester resin having a hydroxyl value of 50 to 90 mg of KOH/g and an oil content of 40 to 50 % as the component a and/or at least one branched hydroxyl-containing polyester based on cycloaliphatic and/or aromatic dicarboxylic and/or polycarboxylic acids having a hydroxyl value of 115 to 150 mg of KOH/g as the component b and/or at least one polyester modified by synthetic fatty acids having a hydroxyl value of 115 to 130 mg of KOH/g as the component c.

4. Coating composition according to any one of Claims 1 to 3, characterized in that the coating composition additionally contains an organic solvent, pigments and/or fillers if appropriate and other conventional auxiliary substances and additives.

5. Coating composition according to any one of Claims 1 to 4, characterized in that the coating composition has a viscosity of 18 to 20 s at a temperature of 20°C at a solids content of at least 60 % by weight.

6. Coating composition according to any one of Claims 1 to 5, characterized in that the coating composition contains at least one aliphatic and/or cycloaliphatic polyisocyanate having an NCO content of 18 to 25 % and a viscosity of 100 to 200 mPas at 20°C, based in each case on the solvent-free isocyanate, and, if desired, a further diisocyanate and/or polyisocyanate as curing agent.

7. Coating composition according to any one of Claims 1 to 6, characterized in that the coating composition contains at least one aliphatic diisocyanate and/or polyisocyanate as curing agent and the curing agent is contained in such amounts that the equivalent ratio of the hydroxyl groups of the binder to the isocyanate groups of the curing agent is between 1 : 1 and 1 : 1.1.

8. Coating composition according to any one of Claims 1 to 5, characterized in that the coating composition contains at least one aromatic diisocyanate and/or polyisocyanate as curing agent and the curing agent is contained in such amounts that the equivalent ratio of the hydroxyl groups of the binder to the isocyanate groups of the curing agent is between 1 : 0.5 and 1 : 0.8.

9. Process for the preparation of the coating compositions according to any one of Claims 1 to 8, characterized in that the coating composition is prepared by mixing and, if appropriate, dispersing a paint component I which contains the binder and a paint component II which contains the curing agent.

10. Process for the coating of plastics and metal substrates, characterized in that a coating composition according to any one of Claims 1 to 8 is applied.

11. Use of the coating compositions according to Claim 7 for topcoat finishing and as industrial primer, especially for the topcoat finishing of large machinery.

12. Use of the coating compositions according to Claim 8 as an industrial primer and for topcoat finishing in the field of interior applications.

## Revendications

1. Agent de revêtement, qui contient un composant de liant à base de polyester et un composant d'agent de durcissement à base d'isocyanate, caractérisé en ce que l'agent de revêtement en tant que liant contient un mélange
a) de 30 à 94 % en poids d'au moins une résine de polyester contenant des groupements hydroxyles ayant un indice OH de 40 à 140 mg de KOH/g et une teneur d'huile de 25 à 57 %,
b) de 3 à 50 % en poids d'au moins un polyester ramifié contenant des groupements hydroxyles à base d'acides dicarboxyliques et/ou polycarboxyliques cycloaliphatiques et/ou aromatiques, ayant un indice OH de 100 à 200 mg de KOH/g et une teneur en alcools et/ou en acides carboxyliques trifonctionnels et/ou à fonctionnalité supérieure d'au moins 15 % en moles, par rapport à la teneur totale en alcools et en acides carboxyliques, et
c) de 3 à 50 % en poids d'au moins un polyester modifié avec des acides gras synthétiques, ayant un indice OH de 80 à 150 mg de KOH/g et une teneur en acides gras synthétiques de 35 à 50 % en poids, par rapport au poids du polyester modifié, la somme des proportions en poids des composants a à c étant à chaque fois de 100 % en poids.

2. Agent de revêtement selon la revendication 1, caractérisé en ce que l'agent de revêtement contient en tant que liant
a) de 70 à 90 % en poids d'au moins une résine de polyester contenant des groupements hydroxyles ayant un indice OH de 40 à 140 mg de KOH/g et une teneur d'huile de 25 à 57 %,
b) de 5 à 15 % en poids d'au moins un polyester ramifié contenant des groupements hydroxyles à base d'acides dicarboxyliques et/ou polycarboxyliques cycloaliphatiques et/ou aromatiques, ayant un indice OH de 100 à 200 mg de KOH/g et une teneur en alcools et/ou en acides carboxyliques trifonctionnels et/ou à fonctionnalité supérieure d'au moins 15 % en moles, par rapport à la teneur totale en alcools et en acides carboxyliques, et
c) de 5 à 15 % en poids d'au moins un polyester modifié avec des acides gras synthétiques, ayant un indice OH de 80 à 150 mg de KOH/g et une teneur en acides gras synthétiques de 35 à 50 % en poids, par rapport au poids du polyester modifié, la somme des proportions en poids des composants a à c étant à chaque fois de 100 % en poids.

3. Agent de revêtement, selon la revendication 1 ou 2, caractérisé en ce que l'agent de revêtement contient, en tant que composant a, au moins une résine de polyester contenant des groupements hydroxyles ayant un indice OH de 50 à 90 mg de KOH/g et une teneur en huile de 40 à 50 % et/ou, en tant que composant b, au moins un polyester ramifié contenant des groupements hydroxyles à base d'acides dicarboxyliques et/ou d'acides polycarboxyliques cycloaliphatiques ou aromatiques ayant un indice OH de 115 à 150 mg de KOH/g et/ou, en tant que composant c, au moins un polyester modifié à l'aide d'acides gras synthétiques ayant un indice OH de 115 à 130 mg de KOH/g.

4. Agent de revêtement selon l'une quelconque des revendications 1 à 3. caractérisé en ce que l'agent de revêtement contient en plus des solvants organiques, le cas échéant, des pigments et/ou des charges ainsi que des additifs et des adjuvants supplémentaires.

5. Agent de revêtement selon l'une quelconque des revendications 1 à 4, caractérisé en ce que l'agent de revêtement présente une viscosité de 18 à 20 secondes à une température de 20°C pour une teneur en matières solides d'au moins 60 % en poids.

6. Agent de revêtement selon l'une quelconque des revendications 1 à 5, caractérisé en ce que l'agent de revêtement contient au moins un polyisocyanate aliphatique et/ou cycloaliphatique ayant une teneur en NCO de 18 à 25 % et une viscosité de 100 à 200 mPas à 20°C, à chaque fois par rapport à l'isocyanate sans la proportion de solvant ainsi que, le cas échéant, un diisocyanate et/ou un polyisocyanate supplémentaire en tant qu'agent de durcissement.

7. Agent de revêtement selon l'une quelconque des revendications 1 à 6, caractérisé en ce que l'agent de revêtement contient au moins un diisocyanate et/ou un polyisocyanate aliphatique en tant qu'agent de durcissement et en ce que l'agent de durcissement est contenu dans des quantités telles que le rapport d'équivalence des groupements hydroxyles du liant aux groupements isocyanates de l'agent de durcissement se situe entre 1:1 et 1 : 1,1.

8. Agent de revêtement selon l'une quelconque des revendications 1 à 5, caractérisé en ce que l'agent de revêtement contient au moins un diisocyanate et/ou un polyisocyanate aromatique en tant qu'agent de durcissement et en ce que l'agent de durcissement est contenu dans des quantités telles que le rapport d'équivalence des groupements hydroxyles du liant aux groupements isocyanates de l'agent de durcissement se situe entre 1 : 0,5, et 1 : 0,8.

9. Procédé de préparation des agents de revêtement selon l'une quelconque des revendications 1 à 8, caractérisé en ce que l'agent de revêtement est préparé par mélange et, le cas échéant, par mise en dispersion d'un composant de laque I, qui contient le liant, et d'un composant de laque II, qui contient l'agent de durcissement.

10. Procédé pour le revêtement de matières synthétiques et de substrats métalliques, caractérisé en ce que l'on procède à l'application d'un agent de revêtement selon l'une quelconque des revendications 1 à 8.

11. Utilisation des agents de revêtement selon la revendication 7, pour le laquage de finition et en tant que peinture d'apprêt dans le domaine industriel, en particulier pour le laquage de finition de grandes machines.

12. Utilisation des agents de revêtement selon la revendication 8, en tant que peinture d'apprêt dans le domaine industriel et pour le laquage de finition dans le domaine des applications d'intérieur.
